Europäisches Patentamt

European Patent Office

Office européen des brevets

(19)

(11) Veröffentlichungsnummer : **0 033 373**
**B1**

(12) **EUROPÄISCHE PATENTSCHRIFT**

(45) Veröffentlichungstag der Patentschrift :
07.12.83

(51) Int. Cl.³ : **B 23 C   7/00**

(21) Anmeldenummer : 80107469.1

(22) Anmeldetag : 28.11.80

(54) **Fräskopf.**

(30) Priorität : 31.01.80 CH 794/80

(43) Veröffentlichungstag der Anmeldung :
12.08.81 Patentblatt 81/32

(45) Bekanntmachung des Hinweises auf die Patenterteilung : 07.12.83 Patentblatt 83/49

(84) Benannte Vertragsstaaten :
**AT BE DE FR GB IT LU NL SE**

(56) Entgegenhaltungen :
**DE-A- 2 110 574**
**DE-B- 2 037 912**
**DE-U- 7 300 887**
**FR-A- 1 517 987**
**US-A- 2 392 035**
**US-A- 3 153 369**
**US-A- 3 589 237**

(73) Patentinhaber : **Denzler, Heinrich**
**Stallikonerstrasse 81**
**CH-8903 Birmensdorf (CH)**

(72) Erfinder : **Denzler, Heinrich**
**Stallikonerstrasse 81**
**CH-8903 Birmensdorf (CH)**

(74) Vertreter : **Blum, Rudolf Emil Ernst et al**
**c/o E. Blum & Co Patentanwälte Vorderberg 11**
**CH-8044 Zürich (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Fräskopf

Die Erfindung betrifft einen Fräskopf, mit einer Arbeitsspindel und einem mit ihr bewegungsverbundenen Spannfutter für einen Fräser und mit einem undrehbar festzulegen bestimmten Gehäuse, das die Arbeitsspindel, das Spannfutter und die zwischenliegenden Uebertragungsorgane aufnimmt, wobei das Gehäuse mehrteilig ist, die Arbeitsspindel in einem ersten Gehäuseteil gelagert ist, das Spannfutter in einem zweiten Gehäuseteil gelagert ist, wobei die beiden Gehäuseteile relativ gegeneinander bewegbar sind, die Spannfutterdrehachse in parallelem Abstand zur Arbeitsspindeldrehachse liegt und Indexmarkierungen vorhanden sind, zur Einstellung der Lageversetzung der Spannfutterdrehachse zur Arbeitsspindeldrehachse zwischen einem Maximalwert und dem Null-Wert, zur Bestimmung der Grösse des Radius der zu fräsenden Krümmung und mit einem dritten und vierten Gehäuseteil, die um die Arbeitsspindeldrehachse relativ gegeneinander verdrehbar sind, wobei der dritte und vierte Gehäuseteil mit Indexmarkierungen zur Einstellung ihrer gegenseitig gedrehten Stellungen versehen sind, zum Drehen der ersten, zweiten und dritten Gehäuseteile als Einheit um die Arbeitsspindeldrehachse gegenüber dem vierten, undrehbar festgelegten Gehäuseteil um einen gewünschten Winkel beim Kurvenfräsen.

Ein solcher Fräskopf ist durch die DE-U-7 300 887.4 bekannt. Obwohl mit diesem bekannten Fräskopf Radien verschiedener Grösse über verschiedene Winkelmasse ohne Verwendung einer teuren programmgesteuerten Maschine gefräst werden können, kann mit diesem Fräskopf jedoch nur durch Probieren die Lage der zu fräsenden Krümmung bezüglich von daran anschliessenden anderen Fräsflächen eingestellt werden. Die genaue z. B. tangentiale Lage von geraden Fräsflächen bezügliche einer gefrästen Krümmung kann somit nicht genau eingestellt und erreicht werden. Das ist verständlicherweise ungenügend und verbesserungswürdig.

Des weiteren ist bei diesem bekannten Fräskopf nachteilig, dass der erste und zweite Gehäuseteil zum Einstellen des zu fräsenden Radius mittels eines Schlittens gegeneinander bewegt werden. Hierzu dient eine Gewindespindel, so wie es beim Vorschub-Support von verschiedenen Werkzeugmaschinen bekannt ist. Diese Schlittenverstellung benötigt verhältnismässig viele Bauteile ; damit der Schlitten aber möglichst klein wird, müssen diese vielen Bauteile kleine Abmessungen haben. Dies bedeutet, dass keine grossen Kräfte übertragen werden können. Hierzu kommt noch, dass möglichst geringe Schwingungen am Fräskopf auftreten sollen, da sonst Rattermarken auftreten oder sonst eine unsaubere Arbeit entsteht. Die Schlittenverstellung ist also zu wenig kompakt und damit zu wenig stabil. Dies lässt sich durch das notwendige Spiel ihrer vielen Bauteile nicht vermeiden, die sich noch summieren können.

Hierdurch verändert sich auch in nicht tolerierbarer Weise die Höhenlage eines vertikal stehenden Fräsers beim Verstellen der Gehäuseteile gegeneinander.

Es ist zwar schon ein Fräskopf bekannt (FR-A 1 517 987), durch den der durch die Schlittenverstellung hervorgerufene Nachteil vermieden werden könnte. Bei diesem bekannten Fräskopf wird zur gegenseitigen Verstellung des ersten und zweiten Gehäuseteils nicht mehr ein Schlitten verwendet, sondern diese beiden Gehäuseteile werden gegeneinander verdreht, um die Lagerversetzung der Spannfutterdrehachse zur Arbeitsspindeldrehachse zum Einstellen der Grösse des zu fräsenden Radius zu erreichen. Diese Bauweise ist sehr vorteilhaft, da der Fräskopf sehr kompakt und damit weitgehend schwingungsfrei gestaltet werden kann. Es werden wenig Bauteile benötigt und es können grosse Kräfte weitgehend vibrationsfrei übertragen werden. Durch die wenigen Bauteile tritt weiterhin wenig Spiel auf. Diese Bauweise ist auch geeignet die Bauteile weitgehend gegeneinander zu verspannen, so dass praktisch kein Spiel zwischen Pinole und Spannfutter auftritt. Mit diesem bekannten Fräskopf lässt sich aber der eingangs genannte Nachteil auch nicht vermeiden, d. h. die Lage der zu fräsenden Krümmung kann nicht exakt zu den anschliessenden geraden Fräsflächen ausgerichtet werden.

Es wird die Schaffung eines Fräskopfes bezweckt, mit dem die erwähnten Nachteile vermieden werden können.

Diese Aufgabe wird durch die Ausbildung des eingangs genannten Fräskopfes gemäss dem kennzeichnenden Teil des Anspruches 1 gelöst.

Der erfindungsgemässe Fräskopf kann sehr kompakt und praktisch spielfrei hergestellt werden, wodurch sich eine hohe Fräsgüte erreichen lässt. Weiterhin kann die jeweils zu fräsende Krümmung in die richtige Zuordnung bezüglich einer X-Achse und Y-Achse, d. h. bezüglich der Längsschlitten- und Querschlittenrichtung der Werkzeugmaschine gebracht werden. In den meisten Fällen werden die Fräsflächen eine solche Zuordnung zueinander haben, dass die geradlinigen Fräsflächen tangential an die gefrästen Kreisflächen anschliessen. Mit dem erfindungsgemässen Fräskopf kann aber auch jeder andere gewünschte Anschluss zwischen geradliniger Fräsfläche und kreisförmiger Fräsfläche exakt erreicht werden.

In der Zeichnung ist ein Ausführungsbeispiel des Erfindungsgegenstandes dargestellt. Es zeigen :

Figur 1 einen Längsschnitt durch einen an einer Fräsmaschine montierten Fräskopf,

Figur 2 eine Seitenansicht des Fräskopfes,

Figur 3 eine Draufsicht auf den Fräskopf mit schematischer Darstellung der Arbeitsspindeldrehachse, Gehäusedrehachse und Spannfutterdrehachse, und

Figur 4 eine mit dem Fräskopf zu fräsende Platte, die geradlinige Fräsflächen und kreisförmige Fräsflächen aufweist, mit den einzelnen Stationen der Fräskopfstellung.

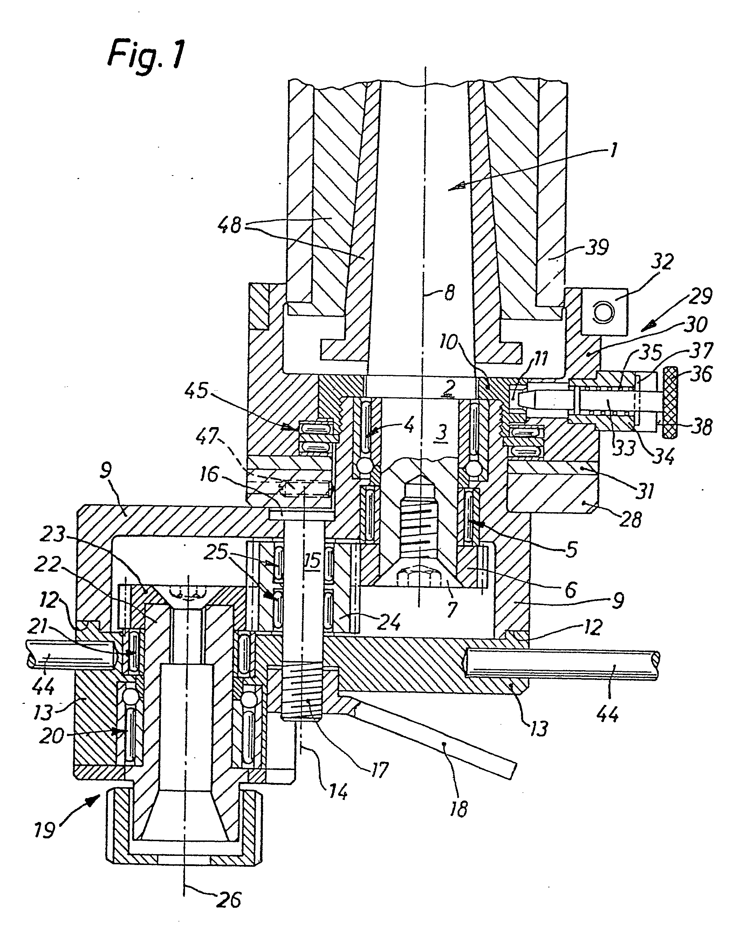

Der in Figur 1 gezeigte Fräskopf hat als obersten Teil einen Fräsdornkegel 1, der mit einem Bund 2 und einem zylindrischen Ansatz 3 versehen ist. Auf letzterem sitzt ein Nadel-Schrägkugellager 4 und ein Nadellager 5 sowie ein Ritzel 6. Die Bauteile 4, 5 und 6 werden mittels einer Schraube 7 auf dem Ansatz 3 gehalten, wobei das Ritzel 6 durch nicht dargestellte Mittel drehfest gehalten wird. Die Bauteile 1, 2, 3, 6 und 7 werden im folgenden als Arbeitsspindel des Fräskopfes bezeichnet, die um die Arbeitsspindeldrehachse 8 drehbar ist.

Diese Arbeitsspindel ist mittels der Lager 4 und 5 in einem ersten Gehäuseteil 9 drehbar gelagert. Mit diesem ersten Gehäuseteil ist ein Ring 10 zu einem Stück verschraubt. Der Ring 10 ist mit vier über den Umfang gleichmässig verteilt angeordneten Rastnuten 11 versehen. Die in Figur 1 untere Stirnfläche des ersten Gehäuseteiles 9 ist mit einer abgestuften Lauffläche 12 für einen zweiten Gehäuseteil 13 versehen. Beide Gehäuseteile 9 und 13 haben eine gemeinsame Drehachse 14, in der ein Lagerzapfen 15 liegt. Letzterer liegt mit seinem Kopf 16 undrehbar im ersten Gehäuseteil 9 und ragt mit seinem anderen Ende durch den zweiten Gehauseteil 13 mit einem Gewindeansatz 17 nach aussen. Auf dem Gewindeansatz 17 sitzt ein Klemmhebel 18. Ist letzterer geöffnet, können beide Gehäuseteile 9 und 13 um die Achse 14 relativ gegeneinander gedreht werden. Bei betätigtem Klemmhebel 18 sind beide Gehäuseteile 9 und 13 undrehbar miteinander verblockf.

Im zweiten Gehäuseteil 13 ist ein Spannfutter 19 mittels eines Nadel-Schrägkugellagers 20 und mittels eines Nadellagers 21 drehbar gelagert. Auf der Spannfutterpatrone 22 sitzt drehfest ein Zahnrad 23. Zwischen dem Ritzel 6 der Arbeitsspindel und dem Zahnrad 23 des Spannfutters liegt zur Bewegungsverbindung ein als Zahnrad 24 ausgebildetes Uebertragungsorgan. Letzteres ist mittels Nadellagern 25 auf dem Lagerzapfen 15 frei drehbar gelagert und kämmt mit dem Ritzel 6 und mit dem Zahnrad 23. Das Spannfutter 19 ist um die Drehachse 26 im zweiten Gehäuseteil 13 drehbar gelagert.

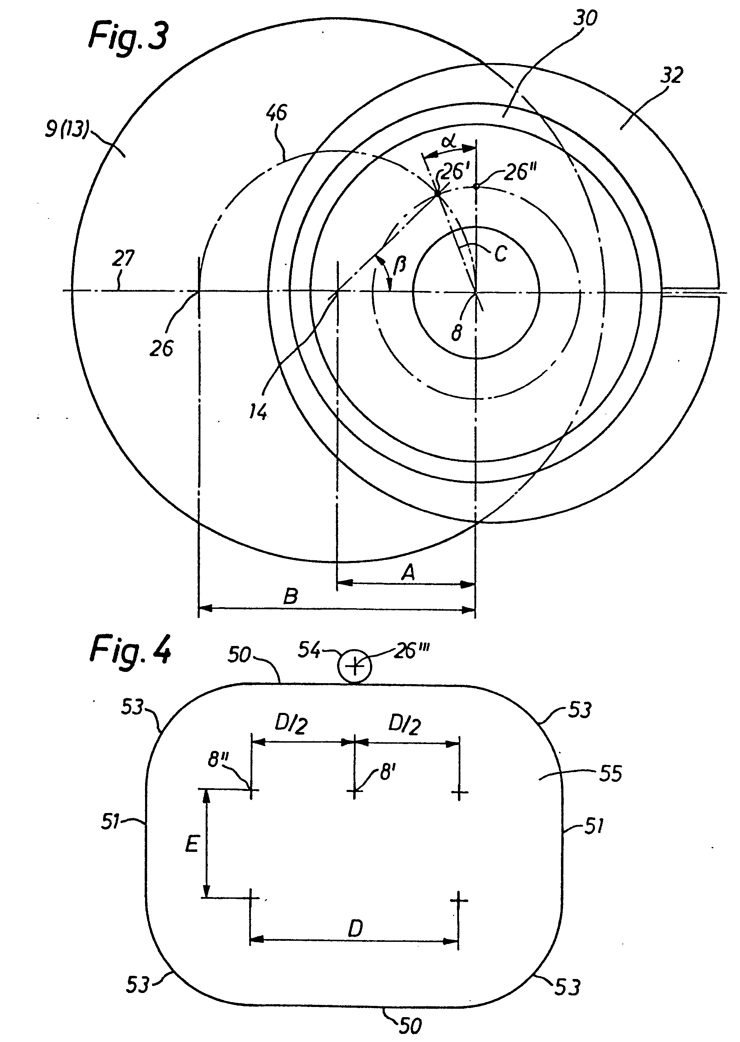

Aus Figur 1 ist ersichtlich, dass die Gehäusedrehachse 14 im parallelen Abstand zur Arbeitsspindeldrehachse 8 liegt. Weiterhin liegt die Gehäusedrehachse 14 auch im parallelen Abstand zur Spannfutterdrehachse 26. Wie bereits eingangs erwähnt, besteht die Arbeitsspindel aus den Bauteilen 1, 2, 3, 6 und 7. Die beiden Gehäuseteile 9 und 13 nehmen somit die Arbeitsspindel, das Spannfutter 19 und das zwischenliegende Uebertragungsorgan 24 auf. Durch Drehen des zweiten Gehäuseteiles 13 um die Drehachse 14 gegenüber dem ersten Gehäuseteil 9 kann der Abstand zwischen der Arbeitsspindeldrehachse 8 und der Spannfutterdrehachse 26 stufenlos zwischen dem in Figur 1-3 gezeigten Maximalwert B und einem Null-Wert verändert werden. Beim dargestellten Maximalwert liegen die drei Drehachsen 8, 14 und 26 in einer Ebene, wobei die Gehäusedrehachse 14 zwischen den beiden anderen Drehachsen 8 und 26 liegt. Bei der Darstellung nach Figur 3 liegen die drei Drehachsen auf der Geraden 27. Beim Null-Wert fällt die Spannfutterdrehachse 26 mit der Arbeitsspindeldrehachse 8 zusammen. Die Arbeitsspindeldrehachse 8 und die Gehäusedrehachse 14 haben einen Abstand A voneinander (Figur 3).

Das Gehäuse hat noch einen dritten Gehäuseteil 28 und einen vierten Gehäuseteil 29. Der vierte Gehäuseteil 29 besteht aus einer Hülse 30, einer daran angeschraubten Platte 31, einem auf der Hülse verdrehbaren und feststellbaren Klemmring 32 und einem Raststift 33, der in einer Büchse 34 sitzt. Innerhalb der Büchse 34 befindet sich eine Schraubendruckfeder 35. In Figur 1 ist der Raststift 33 des vierten Gehäuseteiles 29 in die Rastnut 11 des ersten Gehäuseteiles 9 eingerastet und verbindet die beiden Gehäuseteile 9 und 29 drehfest miteinander. Der Raststift 33 kann an seiner Handhabe 36 gegen die Kraft der Feder 35 in Figur 1 nach rechts gezogen und dann etwas gedreht werden, so dass der Raststift 33 dann ausser Eingriff mit der Rastnut 11 ist und in dieser Stellung verbleibt. In dieser Stellung liegt dann ein Anschlagstift 37 an einer Stirnseite 38 der Büchse 34 an. Mittels des Klemmringes 32 ist der vierte Gehäuseteil 29 an einer undrehbaren, aber axial verstellbaren Pinole 39 einer Fräsmaschine befestigbar. Der dritte Gehäuseteil 28 ist ein Ring, der mit einer Indexmarkierung 40 versehen ist. Der Ring 28 sitzt auf dem ersten Gehäuseteil 9 und ist mit diesem mittels einer Klemmschraube 47 drehfest verbunden. Die Indexmarkierung 40 stellt eine Gradskala dar, die von Null aus nach beiden Seiten eine Gradeinteilung bis 90° aufweist. Die Platte 31 des vierten Gehäuseteiles 29 ist mit einem dieser Gradskala 40 gegenüberliegenden Indexstrich 41 versehen. Wenn der Raststift 33 ausser Eingriff mit der Rastnut 11 ist, können der dritte und vierte Gehäuseteil 28 und 29 um die Arbeitsspindeldrehachse 8 relativ gegeneinander verdreht werden. Durch die Indexmarkierung 40, 41 kann die jeweilige gedrehte Stellung der dritten und vierten Gehäuseteile gegeneinander bestimmt werden. Befindet sich also der Raststift 33 ausser Eingriff mit der Rastnut 11, können die ersten, zweiten und dritten Gehäuseteile 9, 13, 28 als Einheit um die Arbeitsspindeldrehachse 8 gegenüber dem vierten, undrehbar an der Pinole 39 festgelegten Gehäuseteil 29 um einen gewünschten Winkel (beim Kurvenfräsen) gedreht werden.

Der erste Gehäuseteil 9 und der zweite Gehäuseteil 13 sind ebenfalls mit Indexmarkierungen 42 und 43 versehen. Die Markierung 43 ist als Indexstrich beim ersten Gehäuseteil 9 vorhanden. Die Indexmarkierung 42 ist eine nicht lineare Skala, die in später erläuteter Weise hergestellt und benutzt wird. Es soll hierzu jetzt nur soviel gesagt werden, dass sich beim Ausführungsbeispiel die

**0 033 373**

Skala 42 von 0-66 erstreckt.

Wie bereits erwähnt, ist der erste Gehäuseteil 9 mit vier über dem Umfang gleichmässig verteilten Rastnuten 11 versehen, und der vierte Gehäuseteil 29 ist mit einem federbelasteten Raststift 33 versehen. Die Rastnuten 11 und der Raststift 33 stellen miteinander in Eingriff kommende Anschläge dar, zur Beendigung der Drehung der ersten und vierten Gehäuseteile 9, 29 gegeneinander um den gewünschten Drehwinkel beim Kurvenfräsen. Da vorher mitgeteilt wurde, dass vier um 90° versetzt liegende Rastnuten 11 vorhanden sind, kann jetzt schon soviel gesagt werden, dass der Raststift 33 immer nach einem Drehwinkel von 90° bei einer Verdrehung des ersten Gehäuseteiles 9 gegenüber dem vierten Gehäuseteil 29 federbelastet in die nächste Rastnut 11 einschnappen kann. Diese Rasterung um 90° wurde gewählt, da in der Praxis meistens Radien von 90° gefräst werden. Soll mit dem Fräskopf in der Serienfabrikation ständig ein anderer, von 90° abweichender Radius gefräst werden, so würde man die Rastnuten 11 über den Umfang entsprechend anders versetzen. Fräst man jedoch mit dem erläuterten und dargestellten Fräskopf einen von 90° abweichenden Radius, so muss die Bedienungsperson beim Kurvenfräsen die Grad-Skala 40 im Auge behalten, da auf ihr der gewünschte Drehwinkel beim Kurvenfräsen abgelesen werden kann.

Aus Figur 1 ist ersichtlich, dass der zweite Gehäuseteil 13 mit zwei, einander diametral gegenüberliegenden Aufnahmebohrungen für je eine Stange 44 versehen ist. Diese Stangen 44 sind in ihre Aufnahmebohrungen mit möglichst wenig Spiel eingesetzt, können aber leicht von Hand herausgezogen und wieder eingesteckt werden. Diese beiden Stangen 44 stellen eine geradlinige, stangenförmige Handhabe dar, zum Drehen der ersten, zweiten und dritten Gehäuseteile 9, 13, 28 als Einheit gegenüber dem vierten Gehäuseteil 29, der an der Pinole 39 einer Fräsmaschine undrehbar festgelegt ist. Diese Einheit 9, 13 und 28 ist mittels zwei Axial-Wälzlagern 45 drehbar im vierten Gehäuseteil 29 gelagert.

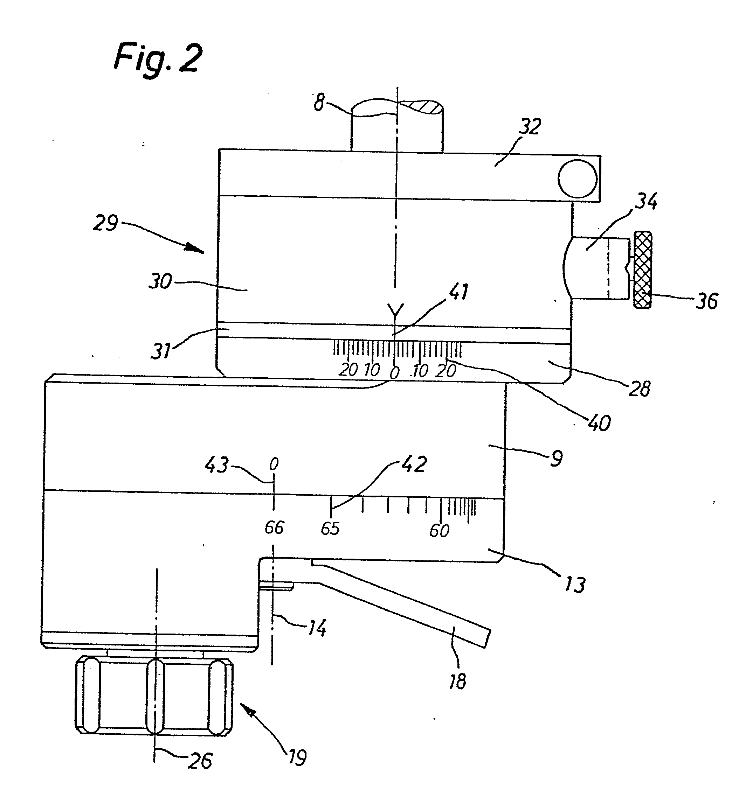

Bei einem Ausführungsbeispiel des dargestellten Fräskopfes betrug der Abstand A beider Achsen 8 und 14 voneinander 33 mm, und der in Figur 3 dargestellte Abstand B betrug dann 66 mm. Der Abstand B ist das Doppelte des Abstandes A, da der zweite Gehäuseteil 13 in Figur 1 so um die Gehäusedrehachse 14 drehbar ist, dass die Spannfutterdrehachse 26 mit der Arbeitsspindeldrehachse 8 zusammenfällt. In Figur 3 ist mit dem Linienzug 46 dargestellt, wie bei einer solchen Verdrehung des zweiten Gehäuseteiles 13 gegenüber dem ersten Gehäuseteil 9 die Spannfutterdrehachse 26 zur Arbeitsspindeldrehachse hin wandert. Bei der in Figur 3 dargestellten Stellung des Fräskopfes liegt die Spannfutterdrehachse 26 im grössten Abstand B von der Arbeitsspindeldrehachse 8. Mit dieser Fräskopfstellung kann der grösste Radius von 66 mm (Betrag B) gefräst werden. Diese Einstellung des zu fräsenden Radius von 66 mm ist aus der Figur 2 ersichtlich, da der Indexstrich 43 dem Skalenwert 66 der Skala 42 gegenüberliegt. Mit diesem Fräskopf kann nun jeder Radius zwischen 0 und 66 mm gefräst werden. Der in Figur 3 gezeigte Kurvenverlauf 46 (Kreisbogen) ist also das Mass für zu fräsende Kreisbögen mit einem Radius zwischen 0 und 66 mm. Soll z. B. ein Radius von 25 mm gefräst werden, so wird von der Null-Stellung aus, bei der in Figur 2 der Indexstrich 43 dem Zahlenwert 0 auf der Skala 42 gegenüberliegt (die Spannfutterdrehachse 26 fällt dann mit der Arbeitsspindeldrehachse 8 zusammen) der zweite Gehäuseteil 13 soviel gegenüber dem ersten Gehäuseteil 9 verdreht, bis der Indexstrich 43 dem Wert 25 auf der Skala 42 gegenüberliegt. Bei dieser Drehung des Teiles 13 gegenüber dem Teil 9 ist die Spannfutterdrehachse 26 von ihrer fluchtenden Lage mit der Arbeitsspindeldrehachse 8 in Figur 3 zur Stelle 26' auf dem Linienzug 46 gewandert. In Figur 3 kann man nun zwischen den drei Punkten 8, 26' und 14 ein Dreieck einzeichnen. In diesem Dreieck kennt man die Länge der Seiten A und C. Hieraus kann der Winkel β bestimmt werden. Im vorliegenden Fall beträgt dieser 44°31'2". Dieses letztgenannte Winkelmass dient zum Herstellen der Skala 42, d. h. der Skalenwert 25 auf der Skala 42 muss unter einem Drehwinkel von 44°31'2" zum Null-Wert auf der Skala 42 versetzt liegen. Für alle anderen zu fräsenden Radien zwischen dem Wert 0 und 66 wird auf die gleiche Weise der jeweilige Winkel β ausgerechnet und aufgrund dieser Werte die Skala 42 hergestellt. Wenn also nunmehr zum Fräsen eines Radius von 25 mm der Skalenwert 25 der Skala 42 dem Indexstrich 43 gegenüber eingestellt worden ist, so beträgt der Abstand der Spannfutterdrehachse 26 zur Arbeitsspindeldrehachse 8 diese 25 mm. Diese Einstellung genügt nun aber noch nicht, um einen Radius von 25 mm beim jeweiligen Werkstück zu fräsen, da natürlich nicht nur das Mass des Radius wichtig ist, sondern auch die Lage des Radius zu den anderen Flächen des Werkstückes. Dies bedeutet, dass das eingestellte Radiusmass von 25 mm noch ins Koordinatensystem gebracht werden muss, d. h. in die richtige Lage bezüglich einer Längsachse oder Querachse des Werkstückes bzw. der Fräsmaschine. Der herzustellende Radius von 25 mm muss also zum Längsschlitten oder Querschlitten der Maschine ausgerichtet liegen. Hierzu dient die Gradskala 40 mit Indexstrich 41 am dritten und vierten Gehäuseteil 28 und 29. Aus Figur 3 ist ersichtlich, dass die Stelle 26' um einen Winkel α korrigiert werden muss, damit sich dann die Spannfutterdrehachse in der Lage 26" befindet. Bei einem Radius von 25 mm beträgt der Winkel α 22°15'. Dieser Skalenwert von 22°15' wird nun also auf der Skala 40 dem Indexstrich 41 gegenübergestellt. Da die Gradskala 40 vom Null-Wert aus nach beiden Seiten um 90° reicht, wird der dritte Gehäuseteil 28 in der einen oder anderen Richtung gedreht, je nachdem in welche Richtung der Radius von 25 mm gefertigt werden soll.

Im folgenden wird nunmehr die Arbeitsweise mit dem Fräskopf erläutert. Der Fräskopf ist mittels des Klemmringes 32 an der Pinole 39 der Fräsmaschine in irgendeiner gedrehten Lage befestigt. Der unter dem zweiten Gehäuseteil 13 liegende Klemmhebel 18 wird gelöst, und die Skala 42 wird mit ihrem Null-Wert dem Indexstrich 43 gegenübergestellt. Nunmehr fluchtet die Spannfutterdrehachse 26 mit der Arbeitsspindeldrehachse 8. Der Klemmhebel 18 wird nunmehr festgeklemmt, so dass also die ersten und zweiten Gehäuseteile 9 und 13 miteinander verblockt sind und keine Relativbewegung gegeneinander ausführen können. Der dritte Gehäuseteil 28 sitzt mit der Klemmschraube 47 undrehbar auf dem ersten Gehäuseteil 9. Nunmehr dreht man die ersten, zweiten und dritten Gehäuseteile 9, 13 und 28 als eine Einheit in eine beliebige Drehrichtung, bis der Raststift 33 federbelastet in eine der vier Rastnuten 11 einschnappt. Nunmehr werden die beiden Stangen 44 in den zweiten Gehäuseteil 13 eingesteckt. Nunmehr wird der Klemmring 32 gelöst. Der Fräskopf kann nicht von der Pinole 39 fallen, da die Arbeitsspindel mit ihrem Konus 1 und einer nicht dargestellten Verschraubung in der Frässpindel 48 drehfest und axialfixiert befestigt ist. Nunmehr wird der gesamte Fräskopf, also inklusive des Klemmringes 32 auf der Pinole 39 bezüglich der X-Achse der Fräsmaschine ausgerichtet, wobei dies z. B. die Richtung des Längsschlittens der Fräsmaschine ist. Hierzu dienen nunmehr die beiden Stangen 44. Zum Ausrichten werden die Stangen 44 von Auge auf die Tischnuten des nicht dargestellten Werkzeugtisches ausgerichtet. Dann wird der Klemmring 32 wieder an der Pinole 39 befestigt. Nunmehr wird die Klemmschraube 47 vom dritten Gehäuseteil 28 gelöst und der dritte Gehäuseteil 28 wird mit seinem Null-Wert der Skala 40 dem Indexstrich 41 gegenüberstellt. Nunmehr wird der dritte Gehäuseteil 28 wieder mittels der Klemmschraube 47 am ersten Gehäuseteil 9 drehfest befestigt. Nunmehr wird der Klemmhebel 18 beim zweiten Gehäuseteil 13 gelöst und der zweite Gehäuseteil 13 wird mit seiner Skala 42 aus das Mass des gewünschten zu fräsenden Radius eingestellt. Wenn z. B. ein Radius von 25 mm gefräst werden soll (das ist der herzustellende Radius am Werkstück plus Radius des Fräsers), wird der Wert 25 der Skala 42 dem Indexstrich 43 gegenübergestellt. Nunmehr wird der Klemmhebel 18 wieder festgeklemmt. Nunmehr erfolgt die bereits erläuterte Korrektur mit der Skala 40. Der dritte Gehäuseteil 28 wird durch Lösen seiner Klemmschraube 47 um den erwähnten Korrekturwinkel in der Darstellung nach Figur 2 nach links gedreht und dann wieder mittels seiner Klemmschraube 47 am ersten Gehäuseteil 9 befestigt. Wie bereits erwähnt, ergibt sich für einen Radius von 25 mm ein Korrekturwinkel von 22°15′. Der Fräskopf wird nunmehr auf irgendeine Weise bezüglich des nicht dargestellten Werkzeugtisches der Fräsmaschine fixiert. Dies kann in der Praxis auf verschiedene Weise erfolgen. Es hat sich in der Praxis als vorteilhaft herausgestellt, wenn dies z. B. mittels am Frästisch anhaftender Magneten erfolgt, die z. B. an den Stangen 44 anliegen. Nunmehr wird der Klemmring 32 gelöst. Nunmehr wird der Raststift 33 aus der Rastnut 11 herausgezogen, und unter Beibehaltung der fixierten Fräskopfstellung wird der vierte Gehäuseteil 29 mit seinem Indexstrich 41 auf den Wert 0 der Skala 40 des dritten Gehäuseteiles 28 gedreht. Nunmehr wird der Klemmring 32 wieder an der Pinole 39 befestigt. Bei diesem vorerwähnten Verdrehen des vierten Gehäuseteiles 29 ist der Raststift 33 um den Drehwinkel 22°15′ gegenüber der Rastnut verdreht worden, kann also in diese nicht einschnappen. Nunmehr wird die Fixierung des Fräskopfes gegenüber dem Werkzeugtisch aufgehoben, d. h., dass die vorerwähnten Magnete entfernt werden. Nunmehr wird der Fräskopf in der Darstellung nach Figur 1 nach links gedreht, bis der Raststift 33 in die Rastnut 11 einschnappt. Dies ist beim Fräsen eines Radius von 25 mm der Drehwinkel von 22°15′. Man kann nunmehr wieder die Klemmschraube 47 vom dritten Gehäuseteil 28 lösen und den dritten Gehäuseteil 28 mit seinem Null-Wert dem Indexstrich 31 gegenüber stellen. Dieses Null-Stellen des dritten Gehäuseteiles 28 ist nicht unbedingt notwendig und dient nur zur Kontrolle um anzuzeigen, wie viel Grad mit dem Fräser beim Fräsen eines Radius gearbeitet worden ist. Wie eingangs erwähnt, schnappt ja der Indexstift 33 nur bei einem Fräsen eines Radius um 90° in eine der Rastnuten 11 ein. Beim Fräsen von anderen Winkeln müssen die jeweils gefrästen Grad an der Skala 40 abgelesen werden ; deshalb das vorherige Nullstellen dieser Skala 40. Im jetzt erläuterten Zustand des Fräskopfes ist dieser parat zum Fräsen von Längsseiten 50 und Querseiten 51 sowie zum zwischenliegenden Fräsen von Radien 53 (Figur 4). In der erläuterten Stellung des Fräskopfes liegt die Spannfutterdrehachse 26 und damit die Längsachse eines Fräsers 54 in der Stellung 26′′′. Die Arbeitsspindeldrehachse befindet sich in der Stellung 8′. Um die aus Figur 4 ersichtliche Kontur einer Platte 55 zu fräsen, wobei die Radien 53 einen Radius von 25 mm haben sollen, ist ein Radius von 25 mm plus den halben Fräserdurchmesser einzustellen. Bei einer Annahme, dass der Fräserdurchmesser 6 mm beträgt, ergibt sich also ein an der Skala 42 in Figur 2 einzustellender Radius von 28 mm. Bei diesem Radius beträgt der aus Figur 3 ersichtliche Korrekturwinkel 25°. Zum Fräsen des geraden Abschnittes 50 wird mit dem Werkzeugtisch die Strekke D/2 verfahren, wobei sich dann die Arbeitsspindeldrehachse in der Stellung 8′′ befindet. Nunmehr wird der Raststift 33 aus der Rastnut 11 gezogen und mit den eingesteckten Stangen 44 werden die ersten, zweiten und dritten Gehäuseteile 9, 13 und 28 als Einheit um die Arbeitsspindeldrehachse 8 gegenüber dem vierten undrehbar festgelegten Gehäuseteil 29 um den gewünschten Winkel von 90° von Hand langsam als Fräsbewegung gedeht, bis der Raststift 33 in eine Rastnut 11 einschnappt. Die Bauteile 9, 13 und 28 werden also als Einheit durch Halten mit beiden Händen an den beiden Stangen 44 um die Arbeitsspindeldrehachse 8 langsam gedreht, wobei ein Radius 53 gefräst wird. Anschliessend wird die Strecke E mit dem Querschlitten der Maschine gefräst. Dann folgt wiederum das Fräsen eines Radius 53 usw.

**Ansprüche**

1. Fräskopf, mit einer Arbeitsspindel (1, 2, 3, 6, 7) und einem mit ihr bewegungsverbundenen Spannfutter (19) für einen Fräser und mit einem undrehbar festzulegen bestimmten Gehäuse, das die Arbeitsspindel, das Spannfutter und die zwischenliegenden Uebertragungsorgane (24) aufnimmt, wobei das Gehäuse mehrteilig ist, die Arbeitsspindel (1, 2, 3, 6, 7) in einem ersten Gehäuseteil (9) gelagert ist, das Spanfutter (19) in einem zweiten Gehäuseteil (13) gelagert ist, wobei die beiden Gehäuseteile (9, 13) relativ gegeneinander bewegbar sind, die Spannfutterdrehachse (26) in parallelem Abstand zur Arbeitsspindeldrehachse (8) liegt und Indexmarkierungen (42, 43) vorhanden sind, zur Einstellung der Lageversetzung der Spannfutterdrehachse (26) zur Arbeitsspindeldrehachse (8) zwischen einem Maximalwert (B) und dem Null-Wert, zur Bestimmung der Grösse des Radius der zu fräsenden Krümmung, und mit einem dritten und vierten Gehäuseteil (28, 29), die um die Arbeitsspindeldrehachse (8) relativ gegeneinander verdrehbar sind, wobei der dritte und vierte Gehäuseteil mit Indexmarkierungen (40, 41) zur Einstellung ihrer gegenseitig gedrehten Stellungen versehen sind, zum Drehen der ersten, zweiten und dritten Gehäuseteile (9, 13, 28) als Einheit um die Arbeitsspindeldrehachse (8) gegenüber dem vierten, undrehbar festgelegten Gehäuseteil (29) um einen gewünschten Winkel beim Kurvenfräsen, dadurch gekennzeichnet, dass der erste und zweite Gehäuseteil (9, 13) in an sich bekannter Weise relativ gegeneinander verdrehbar sind, wobei die Gehäusedrehachse (14) in parallelem Abstand zur Arbeitsspindeldrehachse (8) und zur Spannfutterdrehachse (26) liegt, dass der erste und zweite Gehäuseteil (9, 13) mit Indexmarkierungen (42, 43) zur Einstellung ihrer gegenseitig gedrehten Stellungen versehen sind, und dass diese Indexmarkierungen (42, 43) einerseits eine nicht lineare Skala (42) und andererseits eine Markierungsstelle (43) umfassen, wobei jedem gewünschten Radius beim Kurvenfräsen eine bestimmte Stelle entlang der nicht linearen Skale (42) zugeordnet ist.

2. Fräskopf nach Anspruch 1, dadurch gekennzeichnet, dass der zweite Gehäuseteil (13) mit einer geradlinigen, stangenförmigen Handhabe (44) versehen ist.

**Claims**

1. A milling head, including a main spindle (1, 2, 3, 6, 7) and a chuck (19) for a milling cutter mounted thereto for movement therewith and including a casing intended to be non-rotatably arrested and receiving the main spindle, the chuck and the transmission members (24) arranged therebetween, which casing is a multipart structure, which main spindle (1, 2, 3, 6, 7) is supported in a first casing part (9), which chuck (19) is supported in a second casing part (13), which two casing parts are movable relative to each other, whereby the axis of rotation (26) of the chuck is located at a parallel distance from the axis of rotation (8) of the main spindle and there are provided index markings (42, 43) for setting the positional shift of the axis of rotation (26) relative to the axis of rotation (8) of the main spindle between a largest value (B) and the zero value in order to set the size of the radius of the curvature to be milled, and including a third and a fourth casing part (28, 29) which are rotatable relative to each other around the axis of rotation of the main spindle, whereby the third and the fourth casing parts are provided with index markings (40, 41) for setting their relative rotated positions, in order to rotate during a milling of curvatures the first, second and third casing part (9, 13, 28) as unit around the axis of rotation (8) of the main spindle relative to the fourth non-rotatably mounted casing part (29) through a desired angle, characterized in that the first and second casing part are rotatable relative to each other in a known way whereby the axis of rotation (14) of the casing extends at a parallel distance relative to the axis of rotation (8) of the main spindle and the axis of rotation (26) of the spindle of the chuck, that the first and the second casing parts (9, 13) are provided with index markings (42, 43) for setting their relative rotational positions, and that these index markings (42, 43) comprise on the one hand a non-linear scale (42) and on the other hand a marking point (43), whereby during the milling of a curvature every desired radius is allocated a predetermined point along the non-linear scale (42).

2. The milling head of claim 1, characterized in that the second casing part (13) is provided with a rectilinear, bar-shaped handle (44).

**Revendications**

1. Tête de fraiseuse, avec une broche (1, 2, 3, 6, 7) et un mandrin (19) relié à la broche pour tourner avec elle et tenir une fraise, avec un carter composé de plusieurs parties et prévu pour être arrêté de façon à ne pas tourner et pour porter la broche, le mandrin et les organes de transmission intermédiaires (24), la broche (1, 2, 3, 6, 7) étant portée par une première partie (9) et le mandrin par une seconde partie (13) du carter, ces deux parties (9, 13) étant mobiles l'une par rapport à l'autre, l'axe de rotation (26) du mandrin étant parallèle à l'axe de rotation (8) de la broche et espacé de celle-ci, des repères (42, 43) étant prévus pour régler le décalage entre l'axe (26) du mandrin et l'axe (8) de la broche entre une valeur maximale (B) et la valeur zéro afin de définir le rayon de la courbe à fraiser, et avec une troisième et une quatrième partie (28, 29) du carter pouvant tourner l'une par rapport à l'autre autour de l'axe (8) de la broche, ces parties étant pourvues de repères (40, 41) pour régler leurs positions respectives en rotation, afin de faire tourner en bloc, lors du fraisage d'une courbe, les première, seconde et troisième parties (9, 13, 28) du carter d'un angle voulu autour de l'axe (8) de la broche et par rapport à la quatrième partie (29) montée de façon non rotative, caractérisée en ce que les première et seconde parties (9, 13) sont rotatives, de manière connue en soi, l'une par rapport à l'autre, l'axe de rotation (14) du carter restant parallèle et à distance de l'axe (8) de la broche et de celle (26) du mandrin, en ce que la première et la seconde partie (9, 13) du carter portent des repères (42, 43) pour le réglage de leurs positions relatives en rotation, et en ce que les repères (42, 43) comportent d'une part une échelle non linéaire (42) et d'autre part un index (43), chaque rayon de fraisage désiré correspondant à une position déterminée sur l'échelle non linéaire (42).

2. Tête de fraiseuse selon la revendication 1, caractérisée en ce que la seconde partie (13) du carter comporte une poignée rectiligne (44) en forme de barre.

# Fig.1

# Fig. 2

**Fig.3**

**Fig.4**

3